(19) Europäisches Patentamt

European Patent Office

Office européen des brevets

(11) Numéro de publication: **0 258 261**
**B1**

(12) **FASCICULE DE BREVET EUROPEEN**

(45) Date de publication du fascicule du brevet:
**28.12.88**

(21) Numéro de dépôt: **86907230.6**

(22) Date de dépôt: **20.06.86**

(86) Numéro de dépôt international:
**PCT/FR 86/00217**

(87) Numéro de publication internationale:
**WO 87/00127 (15.01.87 Gazette 87/1)**

(51) Int. Cl.⁴: **B 60 C 23/00**

(54) **CIRCUITT DE CODAGE DE LA VALEUR DE DEUX GRANDEURS MESUREES DANS UN PNEUMATIQUE, ET DISPOSITIF DE SURVEILLANCE DES PNEUMATIQUES UTILISANT UN TEL CIRCUIT.**

(30) Priorité: **03.07.85 FR 8510515**

(43) Date de publication de la demande:
**09.03.88 Bulletin 88/10**

(45) Mention de la délivrance du brevet:
**28.12.88 Bulletin 88/52**

(84) Etats contractants désignés:
**AT BE CH DE FR GB IT LI LU NL SE**

(56) Documents cités:
**EP-A- 0 016 991**
**WO-A-82/02249**
**FR-A- 2 551 556**
**GB-A- 2 122 757**

(73) Titulaire: **MICHELIN & CIE (Compagnie Générale des Etablissements Michelin) Société dite:, 4 rue du Terrail, F-63000 Clermont-Ferrand (FR)**

(72) Inventeur: **DOSJOUB, André, 2, rue du Traversin, F-63400 Chamalières (FR)**
Inventeur: **MYATT, David, 9, rue des Muscades, Pompignat F-63119 Chateaugay (FR)**

(74) Mandataire: **Renaudie, Jacques, Michelin & Cie Service K. Brevets, F-63040 Clermont-Ferrand Cédex (FR)**

ACTORUM AG

## Description

La présente invention concerne les dispositifs de surveillance des pneumatiques. Plus particulièrement, elle se rapporte à la transmission sanś contact galvanique de la pression et de la température du pneumatique vers le châssis du véhicule.

L'état de la technique contient d'innombrables tentatives visant à informer le conducteur d'un véhicule d'une chute de pression à l'intérieur d'un de ses pneumatiques. Le brevet US-A-4 389 884 propose d'assurer la détection grâce à un soufflet déplaçant une ferrite à l'intérieur d'une bobine pour en modifier la valeur de l'inductance en fonction de la pression. La transmission est effectuée par couplage inductif entre deux bobines fixées l'une à la jante et l'autre à une partie du véhicule non mobile en rotation. Le brevet EP-A-45 401 prévoit d'alimenter en énergie un circuit actif disposé dans le pneumatique, de moduler en fréquence un signal électrique en fonction de la pression, de transmettre ce signal vers le châssis par couplage inductif, et d'analyser ce signal en fonction de différents paramètres. Parmi les quelques dispositifs qui surveillent indépendamment deux ou plusieurs grandeurs dans le pneu, on peut citer le brevet US-A-4 052 696 qui décrit un dispositif donnant une alerte lorsqu'un seuil de pression ou un seuil de température est dépassé.

Les dispositifs connus s'avèrent incapables d'assurer une surveillance fiable et précise de l'état d'un pneumatique. Le comportement d'un pneumatique est en effet très complexe et on ne peut réduire sa surveillance à une simple détection d'un seuil. Il est souhaitable de connaître en permanence la pression et la température régnant dans l'enceinte pneumatique. Comme déjà précisé, il ne suffit pas de transmettre un signal de dépassement de seuil des paramètres considérés; il faut qu'un dispositif de surveillance puisse transmettre une mesure desdits paramètres, les mesures transmises pouvant être utilisées en lecture directe ou être exploitées par un système d'analyse gérant une centrale d'alerte implantée au tableau de bord.

L'invention a pour but de permettre la construction d'un dispositif de surveillance de l'état d'un pneumatique qui soit capable de transmettre la valeur de deux grandeurs mesurées à l'intérieur du pneumatique.

L'objectif de l'invention est de réaliser un circuit de codage de la valeur de deux grandeurs mesurées à l'intérieur du pneumatique, permettant la transmission desdites valeurs, sans contact galvanique, vers le châssis du véhicule.

L'objectif de l'invention est de réaliser un dispositif de surveillance, équipé d'un tel circuit, qui soit aussi peu encombrant que possible, qui soit dépourvu de pièces mécaniques, qui soit simple et fiable.

Selon l'invention, le circuit de codage de la valeur de deux grandeurs mesurées sur un pneumatique, permettant la transmission sans contact galvanique desdites valeurs vers le châssis portant ledit pneumatique, est caractérisé en ce qu'il comprend:

a) un premier ensemble dont la fonction de transfert est une fonction de la première des grandeurs mesurées,

b) des moyens permettant de connecter à l'entrée dudit premier ensemble, soit une tension de référence, soit une tension qui est fonction de la seconde des grandeurs mesurées,

c) un second ensemble commandé par le signal de sortie dudit premier ensemble, et délivrant un signal impulsionnel dont les paramètres portent les valeurs desdites grandeurs mesurées.

On entend par «signal impulsionnel» une onde rectangulaire dont les «paramètres» sont la largeur de la période pendant laquelle ce signal est à l'état haut, et la largeur de la période pendant laquelle ce signal est à l'état bas ou bien encore l'une de ces deux largeurs et le rapport cyclique du signal.

Les dessins annexés permettent de mieux comprendre l'invention et d'en saisir tous les avantages, en illustrant deux exemples non limitatifs de réalisation de l'invention appliquée à la mesure de la pression et de la température régnant dans une enceinte pneumatique.

La figure 1 est un schéma synoptique du circuit de codage selon l'invention.

La figure 2 est un schéma d'un circuit selon une première variante.

Les figures 2a à 2f représentent les chronogrammes des principaux signaux expliquant le fonctionnement du circuit de codage représenté à la figure 2.

La figure 3 est un schéma d'une autre variante de réalisation.

Les figures 3a à 3f visualisent les principaux signaux du circuit représenté à la figure 3.

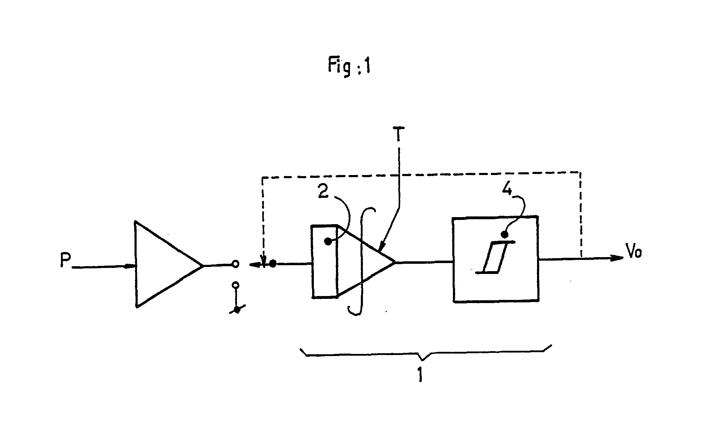

Le principe de fonctionnement du circuit de codage représenté à la figure 1 est de transformer la mesure des grandeurs considérées en mesures de temps au moyen d'un multivibrateur astable 1 délivrant un signal impulsionnel $V_o$ dont la largeur d'impulsion est fonction de la première des grandeurs mesurées, à savoir la température dans les exemples considérés, et dont le rapport cyclique est fonction de la seconde des grandeurs mesurées, à savoir la pression du pneumatique dans ces exemples.

Ledit multivibrateur 1 comporte un premier ensemble 2 dont la fonction de transfert est celle d'un intégrateur, recevant en entrée soit une référence, soit un signal image de la seconde grandeur mesurée, puis un second ensemble 4 transformant la sortie du premier ensemble 2 en signal impulsionnel. Ce circuit de codage permet donc la transmission simultanée de deux valeurs, codées l'une par le rapport cyclique du signal impulsionnel, l'autre par la largeur d'une impulsion. Cependant, cette application n'est pas limitative: on peut fort bien, avec le même circuit, transmettre successivement dans le temps d'abord les valeurs de deux grandeurs mesurées, puis les valeurs de deux autres grandeurs mesurées.

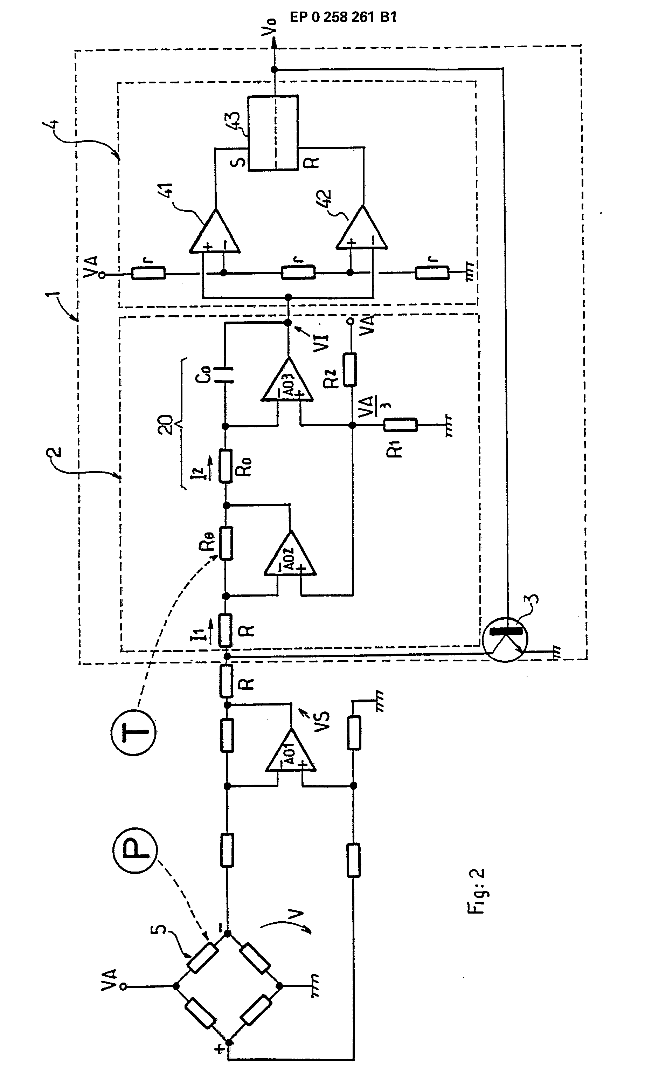

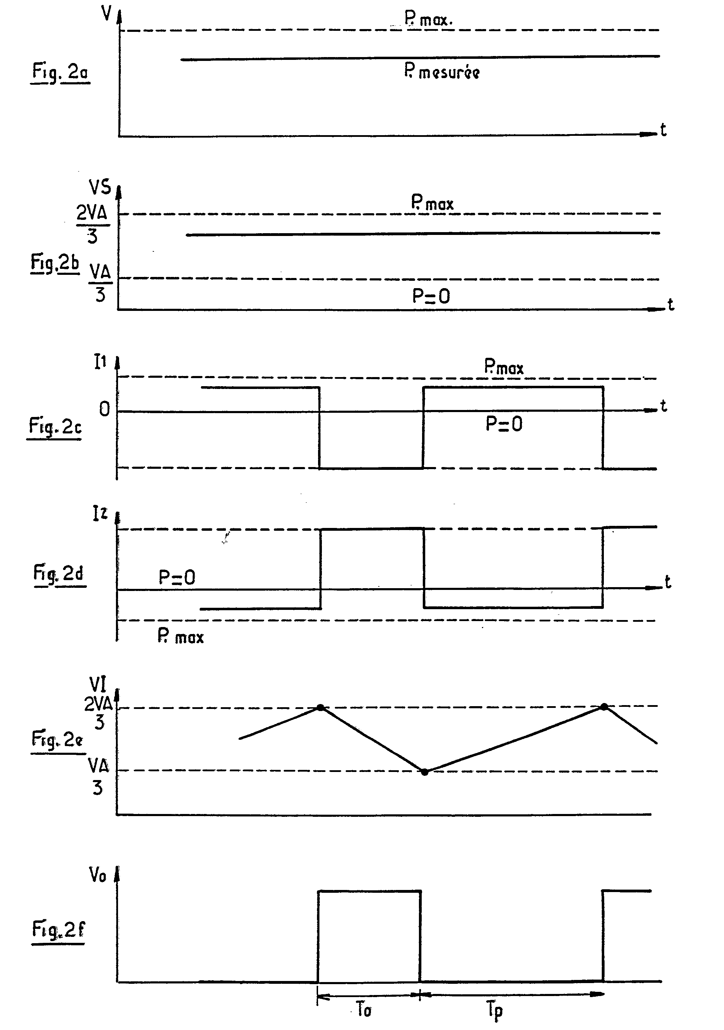

En consultant maintenant la figure 2, on voit que le circuit de codage comporte un premier ensemble 2, constitué pour l'essentiel par un intégrateur 20, la constante de temps dudit ensemble 2 étant fonction de la première des grandeurs mesurées (dans cet exemple, la première grandeur est la température). Cet intégrateur est constitué par un montage comprenant au moins un amplificateur opérationnel AO3, une résistance $R_o$ étant raccordée à l'entrée inverseuse et un condensateur $C_o$ étant inséré dans le circuit de contre-réaction. C'est la manière classique d'utiliser un amplificateur opérationnel comme intégrateur. Une tension est appliquée à l'entrée non inverseuse de l'amplificateur opérationnel AO3 par un pont diviseur résistif constitué par les résistances $R_1$ et $R_2$, dont le rôle d'étalonnage en fonction de la seconde grandeur mesurée est expliqué plus loin. On utilise un capteur de température au silicium $R_\theta$ dont les caractéristiques (résistance interne, sensibilité, linéarité, fiabilité) correspondent bien aux exigences de cette application. Ce capteur $R_\theta$ est monté dans la boucle de contre-réaction d'un amplificateur opérationnel AO2 supplémentaire monté en amplificateur, dont la sortie attaque l'amplificateur opérationnel AO3 monté en intégrateur via la résistance $R_o$. La tension délivrée par le pont diviseur résistif constitué par les résistances $R_1$ et $R_2$ est appliquée aussi à l'entrée non inverseuse de l'amplificateur opérationnel AO2.

L'intégrateur (donc le premier ensemble 2) délivre une tension $V_I$. Cette tension $V_I$ est le signal d'entrée d'un ensemble 4 permettant le repérage de deux seuils, ici au moyen de deux comparateurs 41 et 42, un pont diviseur résistif constitué par 3 résistances r connectées en série pour délivrer les tensions de seuil, et une bascule 43. On entend par «repérage de deux seuils» la localisation des moments où le signal $V_I$ considéré atteint l'un desdits seuils; cet ensemble délivre un signal impulsionnel porteur des valeurs des grandeurs mesurées.

Le circuit de codage comporte encore un transistor 3 monté en émetteur commun, dont la base est commandée par le signal de sortie de la bascule 43, et dont le collecteur est relié à l'entrée du premier ensemble 2. Un amplificateur opérationnel AO1 délivre un signal $V_S$ qui est également appliqué à l'entrée du premier ensemble 2, via une résistance R dont le rôle est d'éviter de mettre la sortie de l'amplificateur opérationnel AO1 en court-circuit lorsque le transistor 3 est passant. L'amplificateur opérationnel AO1 est monté en amplificateur différentiel. Il reçoit en entrée une tension délivrée par un capteur sensible à la seconde grandeur mesurée, à savoir la pression dans cet exemple de réalisation du circuit de codage. Il importe que le capteur choisi soit, du point de vue électrique, équivalent à un pont de Wheaststone ou, plus généralement, délivre une tension proportionnelle à la grandeur mesurée. De préférence on utilise, comme capteur de pression 5, une jauge piézorésistive dont le facteur de jauge est bien plus élevé que pour une jauge conventionnelle du type métallique.

On va maintenant décrire le fonctionnement du circuit de codage en faisant plus particulièrement référence aux figures 2a à 2f donnant les chronogrammes des principaux signaux existant dans le circuit.

En vertu du capteur de pression choisi, sensible à la pression absolue, la tension v délivrée varie proportionnellement entre zéro et une valeur correspondant à la pression maximale pour laquelle le dispositif de surveillance est conçu, ce qui est figuré à la figure 2a par le trait interrompu portant le paramètre «$p_{max}$». Considérons la valeur du signal v indiqué par le trait continu horizontal portant le paramètre «$p_{mesurée}$» (supposons que la pression reste constante pendant l'intervalle de temps considéré). La figure 2b présente le signal $V_S$ qui varie entre les niveaux paramétrés «$p_{max}$» et «$p = 0$». En fonction du dimensionnement de la plage de fonctionnement de l'amplificateur opérationnel AO1, considérons que les valeurs limites de $V_S$ sont

$$\frac{V_A}{3} \text{ et } \frac{2V_A}{3}$$

($V_A$ étant la tension d'alimentation du circuit de codage), ce qui n'enlève rien à la généralité de la démonstration. On établit immédiatement la relation suivante:

$$V_S = \frac{V_A}{3} \frac{p}{p_{max}} + \frac{V_A}{3}$$

La figure 2c donne le chronogramme du signal $I_1$, le courant passant dans la résistance R disposée à l'entrée du premier ensemble 2. Pendant la période de temps $T_p$, le transistor 3 est bloqué, et ce courant est fonction de la différence de potentiel existant entre la tension à l'entrée inverseuse de l'amplificateur opérationnel AO2 et $V_S$. Pendant la période de temps $T_o$, le transistor 3 est passant, donc le courant $I_1$ est fonction de la tension à l'entrée inverseuse de l'amplificateur opérationnel AO2 puisque la référence est ici la masse. Par application des règles de fonctionnement des amplificateurs opérationnels, on fixe par réglage la tension à l'entrée de l'amplificateur opérationnel AO2 (et d'ailleurs de l'amplificateur opérationnel AO3) pour que le courant $I_1$ soit nul si la pression absolue est nulle. En variante, on peut régler à toute valeur appropriée le courant $I_1$ correspondant à une pression absolue nulle. En se reportant à la figure 2b et aux explications ci-dessus, on voit que ladite tension est de $\frac{V_A}{3}$.

Ainsi le circuit de codage se trouve étalonné relativement à la pression. En tenant compte de l'expression de $V_S$, on en déduit immédiatement que
— pendant la période de temps $T_p$,

$$I_I = \frac{V_S - \dfrac{V_A}{3}}{2R} = \frac{\dfrac{V_A}{3} \dfrac{p}{p_{max}}}{2R}$$

— pendant la période de temps $T_o$,

$$I_I = -\frac{V_a}{3} \frac{1}{R}$$

La figure 2d représente le courant $I_2$ passant dans la résistance $R_o$. Par une simple application des règles fondamentales de fonctionnement de l'amplificateur opérationnel AO2 monté en ampli-

ficateur, on calcule, en respectant les polarités choisies, que

$$I_2 = - \frac{R_\theta}{R_o} I_1,$$

ce qui donne

— pendant la période de temps $T_p$,

$$I_2 = \frac{-R_\theta}{R_o} \frac{1}{2R} \frac{V_A}{3} \frac{p}{p_{max}} \qquad \text{(Eq. 1)}$$

— pendant la période de temps $T_o$,

$$I_2 = \frac{R_\theta}{R_o} \frac{1}{R} \frac{V_A}{3} \qquad \text{(Eq. 2)}$$

La figure 2e représente la loi de variation de la tension $V_l$ en sortie de l'intégrateur 20. L'amplificateur opérationnel AO3 fonctionnant en intégrateur, la tension aux bornes du condensateur $C_o$ obéit à la loi

$$\frac{dv}{dt} = - \frac{I_2}{C_o}$$

Ainsi, pendant la période de temps $T_p$, la variation de $V_l$ en fonction du temps est représentée par une rampe croissante, tandis que pendant la période de temps $T_o$ c'est une rampe décroissante. Remarquons que la pente de la rampe croissante dépend à la fois de la pression (p dans l'équation Eq. 1) et de la température ($R_\theta$ dans l'équation Eq. 1) alors que la pente de la rampe décroissante ne dépend que de la température ($R_\theta$ dans l'équation Eq. 2).

Les valeurs limites de $V_l$ sont fixées par les seuils repérés par les comparateurs 41 et 42

$$\left( \text{respectivement } \frac{2V_A}{3} \text{ et } \frac{V_A}{3} \right).$$

Considérons le signal $V_l$ pendant la période $T_p$. Dès que $V_l$ dépasse la valeur $\frac{2V_A}{3}$ le comparateur 41 envoie une impulsion à l'entrée S (set) de la bascule 43 qui délivre donc un signal haut qui, appliqué au transistor 3, le rend passant. L'entrée du premier ensemble 2 est donc mise à la masse, ce qui a pour effet de faire débuter le mode de fonctionnement décrit pour la période $T_o$. Dès que le signal $V_l$ devient inférieur à $\frac{V_A}{3}$, le comparateur 42 envoie une impulsion à l'entrée R (reset) de la bascule 43 qui délivre donc un signal bas (zéro volt) qui bloque le transistor 3. Le mode de fonctionnement décrit pour la période $T_p$ débute.

La forme du signal $V_l$ permet d'écrire

$$\frac{\Delta V_l}{\Delta t} = - \frac{I_2}{C_o}$$

d'où $\Delta t = \frac{C_o}{I_2} \Delta V_l$, ce qui donne:

$$T_p = - \frac{C_o}{I_2} \frac{V_A}{3} = \frac{C_o R_o 2R}{R_\theta} \frac{p_{max}}{p} \qquad \text{(Eq. 3)}$$

et

$$T_o = - \frac{C_o}{I_2} \left( - \frac{V_A}{3} \right) \frac{C_o R_o R}{R_\theta} \qquad \text{(Eq. 4)}$$

Les équations précédentes démontrent que les périodes $T_o$ et $T_p$ sont indépendantes de la tension d'alimentation $V_A$ qui est toujours sujette à fluctuations pour un circuit destiné à être implanté sur une roue, quel que soit le mode d'alimentation, par pile (décharge progressive), ou par condensateur chargé par couplage inductif comme indiqué dans le brevet EP 45 401 (décharge rapide). De l'équation 4, on déduit, en utilisant la caractéristique résistance-température du capteur $R_\theta$, que la température mesurée est fonction de la période de temps $T_o$. En introduisant la valeur $R_\theta$ tirée de l'équation 4 dans l'équation 3, on obtient, après quelques calculs élémentaires, l'expression de la pression:

$$p = 2p_{max} \frac{T_o}{T_p}$$

On voit donc que l'on a remplacé la mesure de 2 grandeurs par des mesures de temps qui sont de plus indépendantes de la tension d'alimentation du circuit, ce qui se prête particulièrement bien à la transmission fiable des grandeurs mesurées entre une roue et le châssis d'un véhicule.

La figure 2f représente le signal de sortie $V_o$ du circuit de codage selon la figure 2. Le signal de sortie est bien celui d'un multivibrateur astable puisque, en pratique, on ne mesure pas des pressions inférieures à la pression atmosphérique et donc le courant $I_2$ n'est jamais nul. Ainsi, la température est fonction de la largeur d'impulsion du signal $V_o$ et la pression est fonction du rapport cyclique dudit signal $V_o$. De préférence, on utilise des composants électroniques de technologie CMOS afin de minimiser la consommation du circuit. Le circuit peut être réalisé avec des composants discrets ou de préférence sous forme de circuit hybride ou intégré pour l'essentiel de ses éléments.

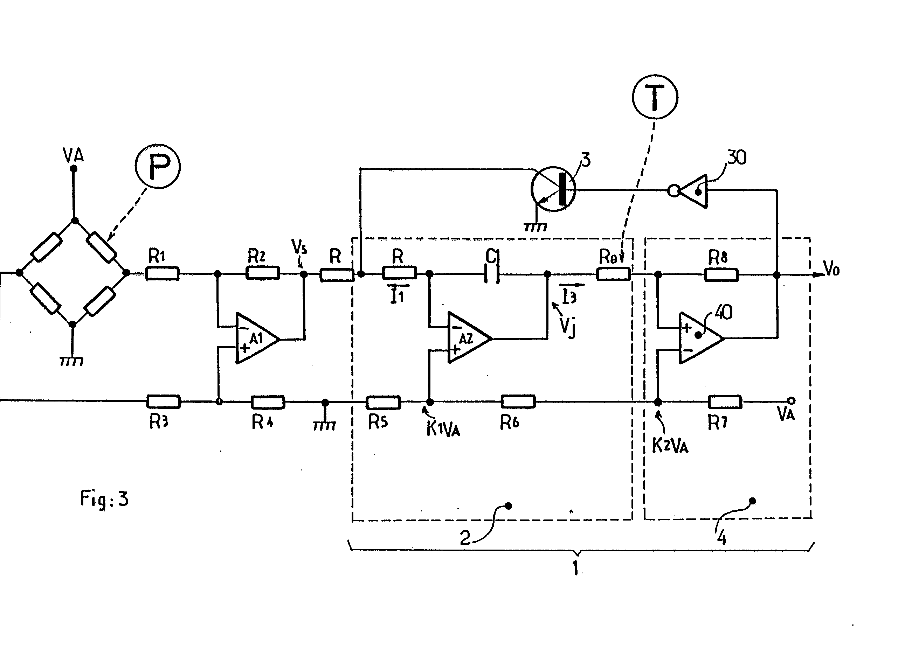

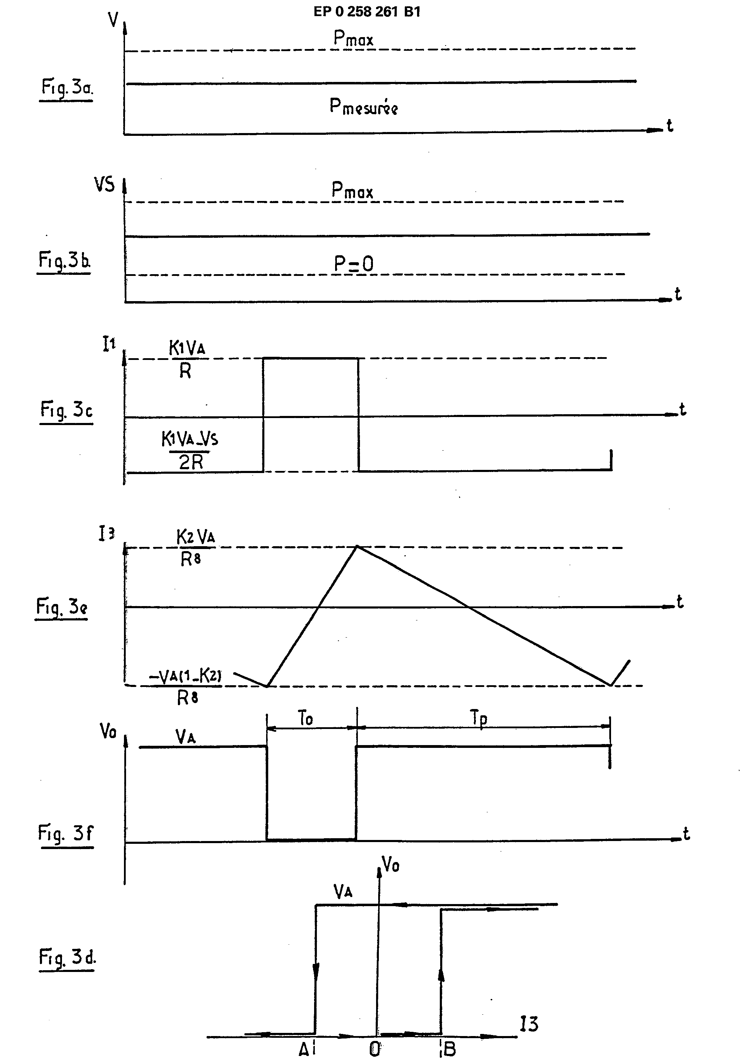

Une autre variante de réalisation du circuit de codage selon l'invention est proposée à la figure 3. Le premier ensemble 2 dont la fonction de transfert est fonction de la première des grandeurs mesurées ne comporte qu'un seul amplificateur opérationnel monté en intégrateur A2, puis, en sortie de cet amplificateur, une résistance sensible à la température $R_\theta$. Ensuite, on trouve un second ensemble permettant d'effectuer le repérage de deux seuils au moyen d'un seul comparateur 40. A cette fin, le comparateur reçoit d'une part une tension de référence constituée par une fraction de la tension d'alimentation, soit $k_2 V_A$, et d'autre part un signal qui est fonction à la fois de la sortie de l'intégrateur A2, donc de la sortie du premier ensemble 2 et de la sortie du second ensemble 4 lui-même par l'intermédiaire de la boucle de réaction constituée par la branche comportant la résistance $R_8$.

Ce second exemple procède du même principe que le premier et il est donc inutile de reprendre en détail tout le fonctionnement. L'explication ci-dessous doit être consultée en parallèle avec les figures 3a à 3f relatives aux principaux signaux du circuit.

Le signal $V_S$ est élaboré de la même façon que dans la première variante.

Les branches contenant les résistances $R_5$ à $R_7$ constituent un diviseur de tension résistif de la tension d'alimentation $V_A$. Compte tenu de la convention de signe choisie pour le courant $I_1$ à la figure 3, et en considérant la tension $V_j$ en sortie de l'intégrateur A2, on a immédiatement que $\dfrac{dV_j}{dt} = \dfrac{I_1}{C_1}$ et que:

— pendant la période de temps $T_p$ (transistor 3 bloqué):

$$I_1 = \frac{k_1 V_A - V_S}{2R} \text{ d'où } \frac{dV_j}{dt} = -\frac{V_S - k_1 V_A}{2RC_1}$$

— pendant la période de temps $T_o$ (transistor 3 passant):

$$I_1 = \frac{k_1 V_A}{R} \text{ d'où } \frac{dV_j}{dt} = \frac{k_1 V_A}{RC_1}$$

La figure 3c représente la loi de variation de $I_1$, compte tenu du fait que $k_1$ doit être choisi tel que $k_1 V_A - V_S$ soit négatif.

Le second ensemble 4 comporte un comparateur 40 dont la sortie est à l'état bas (soit $V_o =$ zéro volt) lorsque la tension appliquée à l'entrée non inverseuse (soit $V_+$) est inférieure à $k_2 V_A$ (ce qui est vrai pendant la période $T_o$ où la sortie de l'amplificateur opérationnel AO2 est croissante) et dont la sortie est à l'état haut (soit $V_o = V_A$) lorsque $V_+$ est supérieure à $k_2 V_A$. Compte tenu de la convention de signe adoptée pour le courant $I_3$ à la figure 3, calculons les points de basculement du comparateur 40 (voir A et B à la figure 3d):

— partant de $V_o = 0$, on a en B

$$I_3 R_8 = k_2 V_A \text{ d'où } I_3 = \frac{k_2 V_A}{R_8}$$

— partant de $V_o = V_A$, on a en A:

$$- I_3 R_8 = V_A - k_2 V_A \text{ d'où } I_3 = \frac{V_A - k_2 V_A}{R_8}$$

On voit donc que le signal $V_o$ en fonction de $I_3$ comporte une hystérésis, introduite par la boucle de réaction comportant la résistance $R_8$. Cela permet le repérage de deux seuils avec un seul comparateur 40.

Calculons la variation $\Delta I_3$ entre les deux seuils A et B:

$$I_3)_{B-A} = \frac{k_2 V_A}{R_8} + \frac{V_A - k_2 V_A}{R_8} = \frac{V_A}{R_8}$$

Par une simple application de la loi d'Ohm et par remplacements successifs, on calcule:
— la période $T_p$:

$$I_3 R_\theta = V_j - k_2 V_A$$

$$\frac{dI_3}{dt} = \frac{1}{R_\theta} \frac{d}{dt} (V_j - k_2 V_A)$$

$$\frac{\Delta I_3}{\Delta t} = \frac{-1}{R_\theta} \frac{V_S - k_1 V_A}{2RC_1}$$

$$T_p = \frac{V_A}{R_8} \frac{R_\theta 2RC_1}{k_1 V_A - k_3 V_A \dfrac{p}{p_{max}} - k_3 V_A}$$

en généralisant l'expression de $V_S$, calculée dans la description du premier exemple

$$T_p = \frac{2RR_\theta C_1}{R_8 \left(k_1 - k_3 - k_3 \dfrac{p}{p_{max}}\right)} \qquad \text{(Eq. 5)}$$

— la période $T_o$:

$$I_3 R_\theta = V_j - k_2 V_A$$

$$\frac{dI_3}{dt} = \frac{1}{R_\theta} \frac{d}{dt} (V_j - k_2 V_A)$$

$$\frac{dI_3}{dt} = \frac{1}{R_\theta} \frac{k_1 V_A}{RC_1}$$

$$T_o = \frac{V_A}{R_8} \frac{R_\theta RC_1}{k_1 V_A}$$

$$T_o = \frac{RC_1}{k_1 R_8} R_\theta \qquad \text{(Eq. 6)}$$

Les équations 5 et 6 montrent que les périodes $T_o$ et $T_p$ sont cette fois encore indépendantes de la tension d'alimentation. De l'équation 6, on déduit que la température (en connaissant la caractéristique résistance-température du capteur $R_\theta$) est mesurée par $T_o$. En introduisant la valeur de $R_\theta$ tirée de l'équation 6, on obtient, après quelques calculs élémentaires, que la pression est mesurée par le rapport cyclique $\dfrac{T_o}{T_p}$.

La figure 3f représente le signal de sortie du circuit de codage décrit à la figure 3. Ce signal est équivalent à celui délivré par le premier exemple de réalisation (figure 2f) puisque, s'agissant de niveaux logiques, il est indifférent que $V_o$ soit à l'état haut ou à l'état bas pendant la période $T_o$. Sur la figure 3, on trouve encore un inverseur 30 permettant de commander le transistor 3 de manière appropriée.

Les moyens d'alimenter le circuit de codage ainsi que les moyens de transmettre le signal codé $V_o$ sont connus de l'homme de l'art et n'entrent pas dans le cadre de la présente invention. A titre d'exemple, on trouve dans la demande de brevet FR 85/10516 issue de la demanderesse, la description d'un étage d'alimentation en énergie et d'un étage de transmission du signal par couplage inductif permettant d'améliorer encore les performandes globales d'un dispositif de surveillance de pneumatiques. Le type de signal transmis impose que la transmission ne dépende pas de la position angulaire des roues. Dans le cas de la transmission par couplage inductif, il faut donc que la bobine liée à la roue soit concentrique à celle-ci. Cependant, les tolérances de positionnement des bobines (liées l'une à la roue, l'autre à une partie du véhicule non mobile en rotation) peuvent être assez larges. Les fréquences transmises par couplage inductif doivent de préférence être inférieures à 100 kHz pour éviter une atténuation trop importante.

## Revendications

1. Circuit de codage de la valeur de deux grandeurs mesurées sur un pneumatique, permettant la transmission sans contact galvanique desdites valeurs vers le châssis portant ledit pneumatique, caractérisé en ce qu'il comprend:

a) un premier ensemble (2) dont la fonction de transfert est une fonction de la première (T) des grandeurs mesurées,

b) des moyens (3) permettant de connecter à l'entrée dudit premier ensemble, soit une tension de référence, soit une tension qui est fonction de la seconde (P) des grandeurs mesurées,

c) un second ensemble (4) commandé par le signal de sortie dudit premier ensemble, et délivrant un signal impulsionnel dont les paramètres portent les valeurs desdites grandeurs mesurées.

2. Circuit selon la revendication 1, caractérisé en ce que ledit premier ensemble (2) comporte essentiellement un intégrateur (20) et en ce que la constante de temps dudit premier ensemble est fonction de ladite première grandeur (T) mesurée.

3. Circuit selon la revendication 1 ou 2, caractérisé en ce que ledit second ensemble (4) comporte essentiellement des moyens permettant le repérage de deux seuils.

4. Circuit selon la revendication 3, caractérisé en ce que lesdits moyens permettant le repérage comportent deux comparateurs (41, 42), et une bascule (43).

5. Circuit selon la revendication 3, caractérisé en ce que lesdits moyens permettant le repérage comportent un seul comparateur (40) pourvu d'une boucle de réaction (R₈).

6. Circuit selon l'une des revendications 1 à 5, caractérisé en ce que ladite tension, qui est une fonction de la seconde des grandeurs mesurées, est appliquée à l'entrée dudit premier ensemble par l'intermédiaire d'un amplificateur opérationnel (AO1) recevant une tension délivrée par un capteur (5) sensible à ladite seconde grandeur.

7. Circuit selon l'une des revendications 1 à 6, caractérisé en ce que lesdits moyens (3) permettant de connecter sont constitués par un transistor monté en émetteur commun, dont la base est commandée par la sortie dudit second ensemble, et dont le collecteur est relié à l'entrée dudit premier ensemble.

8. Circuit selon la revendication 2, caractérisé en ce que l'intégrateur (20) est constitué par un montage comprenant au moins un amplificateur opérationnel (AO3), une résistance (R₀) étant raccordée à l'entrée inverseuse et un condensateur (C₀) étant inséré dans le circuit de contre-réaction, une tension étant appliquée à l'entrée non inverseuse dudit amplificateur opérationnel par un pont diviseur résistif (R₁, R₂) permettant un étalonnage dudit circuit relativement à ladite seconde grandeur mesurée.

9. Circuit selon la revendication 8, caractérisé en ce que ladite première grandeur (T) est la température régnant dans le pneumatique et en ce qu'on utilise un capteur de température sous forme de résistance au silicium (R₀), monté dans la boucle de contre-réaction d'un amplificateur opérationnel (AO2) supplémentaire, utilisé en amplificateur, dont la sortie attaque ledit amplificateur opérationnel (AO3) monté en intégrateur.

10. Circuit selon la revendication 8, caractérisé en ce que ladite première grandeur (T) est la température régnant dans le pneumatique et en ce que l'on utilise un capteur de température sous forme de résistance au silicium (R₀) monté en sortie de l'amplificateur opérationnel intégrateur (A2).

11. Circuit selon l'une des revendications 1 à 10, carctérisé en ce que ladite seconde grandeur (P) est la presion régnant dans le pneumatique, et en ce que le capteur est une jauge piézo-résistive (5).

12. Circuit selon l'une quelconque des revendications 1 à 11, caractérisé en ce qu'il est réalisé pour l'essentiel sous forme de circuit hybride ou de circuit intégré.

## Patentansprüche

1. Kodierkreis für die Werte zweier gemessener Grössen eines Luftreifens, der die kontaktlose Übertragung dieser Werte zu dem Chassis, welches den Luftreifen trägt, gestattet, dadurch gekennzeichnet, dass es:

a) ein erstes Ensemble (2) aufweist, dessen Transferfunktion eine Funktion der ersten (T) der gemessenen Grössen ist,

b) Mittel (3) aufweist, die es erlauben, am Eingang des genannten ersten Ensembles entweder eine Referenzspannung oder eine Spannung, die abhängig von der zweiten (P) der gemessenen Grössen ist,

c) ein zweites Ensemble (4) aufweist, welches durch das Ausgangssignal des genannten ersten Ensembles gesteuert wird und ein Impulssignal abgibt, dessen Parameter die Werte der gemessenen Grössen wiedergibt.

2. Kodierkreis nach Anspruch 1, dadurch gekennzeichnet, dass das genannte erste Ensemble (2) im wesentlichen einen Integrator (20) aufweist und dass die Zeitkonstante des genannten ersten Ensembles eine Funktion der genannten ersten gemessenen Grösse (T) ist.

3. Kodierkreis nach Anspruch 1 oder 2, dadurch gekennzeichnet, dass das genannte zweite Ensemble (4) im wesentlichen Mittel aufweist, die das Überschreiten von zwei Schranken feststellen können.

4. Kodierkreis nach Anspruch 3, dadurch gekennzeichnet, dass die genannten Mittel, die das Überschreiten der Schranken feststellen, zwei Vergleiche (41, 42) und eine Waage (43) aufweisen.

5. Kodierkreis nach Anspruch 3, dadurch gekennzeichnet, dass die genannten Mittel zum Feststellen der Schranken einen einzigen Vergleicher (40) mit einer Rückkopplungsschaltung (R₈) aufweisen.

6. Kodierkreis nach einem der Ansprüche 1 bis 5, dadurch gekennzeichnet, dass die genannte Spannung eine Abhängigkeit der zweiten der gemessenen Grössen ist und am Eingang des genannten ersten Ensembles über einen Operationsverstärker (AO1) anliegt, der eine Spannung erhält, die von einem Aufnehmer (5) für die zweite der genannten Grössen erhält.

7. Kodierkreis nach einem der Ansprüche 1 bis 6, dadurch gekennzeichnet, dass die genannten Mittel (3), die die Verbindung erlauben, aus einem Transistor bestehen, dessen Emitter geerdet ist, dessen Basis vom Ausgang des genannten zweiten Ensembles angesteuert wird und dessen Kollektor mit einem Eingang des genannten ersten Ensembles verbunden ist.

8. Kodierkreis nach Anspruch 2, dadurch gekennzeichnet, dass der Integrator (20) aus einer Schaltung gebildet ist, die zumindest einem Operationsverstärker (AO3), einen Widerstand ($R_o$), der am inversen Eingang anliegt und einen Kondensator ($C_o$), der in den Rückkopplungskreis geschaltet ist, besteht und dass eine Spannung am nicht inversen Eingang des genannten Operationsverstärkers durch eine resistive Verteilerbrükke ($R_1$, $R_2$) angelegt wird, was eine Eichung des Kreises bezügliche der zweiten der gemessenen Grösse erlaubt.

9. Kodierkreis nach Anspruch 8, dadurch gekennzeichnet, dass die erste gemessene Grösse (T) die im Luftreifen herrschende Temperatur ist und dass man einen Temperaturaufnehmer in Form eines Siliziumwiderstandes ($R_\theta$) verwendet, der im Rückkopplungskreis eines zusetzlichen Operationsverstärkers (AO2) vorgesehen ist, der als Verstärker geschaltet ist und dessen Ausgang den als Integrator arbeitenden Operationsverstärker (AO3) anliegt.

10. Kodierkreis nach Anspruch 8, dadurch gekennzeichnet, dass die erste gemessene Grösse (T) die Temperatur im Inneren des Luftreifens ist und dass man einen Temperaturaufnehmer in Form eines Siliziumwiderstandes ($R_\theta$) verwendet, der am Ausgang des Operationsverstärkers (A2) der als Integrator arbeitet.

11. Kodierkreis nach einem der Ansprüche 1 bis 10, dadurch gekennzeichnet, dass die genannte zweite Grösse (P) der im Luftreifen herrschenden Druck ist und dass der Aufnehmer ein piezo-resistives Element (5) ist.

12. Kodierkreis nach einem der Ansprüche 1 bis 11, dadurch gekennzeichnet, dass er im wesentlichen in Form eines Hybridschaltkreises oder eines integrierten Schaltkreises ausgebildet ist.

## Claims

1. A circuit for coding the value of two variables measured in a tyre, which permits the transmission of the values to the chassis bearing the tyre without galvanic contact, characterized by the fact that the circuit comprises:

a) a first unit (2) the transfer function of which is a function of the first (T) of the variable measured;

b) means (3) for connecting to the input of the first unit either a reference voltage or a voltage which is a function of the second (P) of the variables measured;

c) a second unit (4) controlled by the output signal of the first unit and delivering a pulse signal the parameters of which bear the values of the measured variables.

2. A circuit according to claim 1, characterized by the fact that the first unit (2) comprises essentially an integrator (2) and by the fact that the time constant of the first unit is a function of the first (T) measured variable.

3. A circuit according to claim 1 or 2, characterized by the fact that the second unit (4) comprises essentially means permitting the referencing of two thresholds.

4. A circuit according to claim 3, characterized by the fact that the means permitting the referencing comprise two comparators (41, 42) and a flipflop (43).

5. A circuit according to claim 3, characterized by the fact that the means permitting the referencing comprise a single comparator (40) provided with a feedback loop ($R_8$).

6. A circuit according to claims 1 to 5, characterized by the fact that the voltage which is a function of the second of the variables measured is applied to the input of the first unit via an operational amplifier (AO1) receiving a voltage delivered by a detector (5) responsive to the second variable.

7. A circuit according to claims 1 to 6, characterized by the fact that the connecting means (3) are formed of a transistor mounted as a common emitter the base of which is controlled by the output of the second unit and the collector of which is joined to the input of the first unit.

8. A circuit according to claim 2, characterized by the fact that the integrator (20) is formed of a connection which comprises at least one operational amplifier (AO3), a resistor ($R_o$) being connected to the inverting input and a condenser ($C_o$) being inserted in the feedback circuit, a voltage being applied to the non-inverting input of the operational amplifier by a resistance divider bridge ($R_1$, $R_2$) permitting calibration of the circuit relative to the second measured variable.

9. A circuit according to claim 8, characterized by the fact that the first (T) variable is the temperature prevailing in the tyre and by the fact that a temperature detector is used in the form of a silicon resistor ($R_\theta$) mounted in the feedback loop of an additional operational amplifier (AO2), the output of which acts on said operational amplifier (AO3) in the integrator.

10. A circuit according to claim 8, characterized by the fact that the first variable (T) is the temperature prevailing in the tyre and by the fact that a temperature detector is used in the form of a silicon resistor ($R_\theta$) mounted at the output of said one operational amplifier in the integrator (A2).

11. A circuit according to claim 1 to 10, characterized by the fact that said second variable (P) is the pressure prevailing in the tyre and by the fact that the detector is a piezoresistive gauge (5).

12. A circuit according to claims 1 to 11, characterized by the fact that it is essentially in the form of a hybrid circuit or integrated circuit.

Fig :1

Fig: 2

Fig. 2a

Fig. 2b

Fig. 2c

Fig. 2d

Fig. 2e

Fig. 2f

13

EP 0 258 261 B1

VA

P

T

3

30

R1 R2 Vs R R C1 R₉ R8 V₀

A1 A2 40

I₁ I₃ Vj

R3 R4 R5 R6 R7 VA

K1VA K2VA

2 4

1

Fig:3

Fig. 3a.

$V$

$P_{max}$

$P_{mesurée}$

$t$

Fig. 3b.

$VS$

$P_{max}$

$P = 0$

$t$

Fig. 3c

$I1$

$\dfrac{K_1 V_A}{R}$

$\dfrac{K_1 V_A}{2R} - V_S$

$t$

Fig. 3e

$I3$

$\dfrac{K_2 V_A}{R_8}$

$\dfrac{-V_A(1 - K_2)}{R_8}$

$t$

$T_0$

$T_p$

Fig. 3f

$V_0$

$V_A$

$t$

Fig. 3d.

$V_0$

$V_A$

$A$ 0 $B$

$I3$

17